# EUROPÄISCHE PATENTSCHRIFT

(11) **EP 2 450 686 B1**
(45) Veröffentlichungstag und Bekanntmachung des Hinweises auf die Patenterteilung: **11.12.2013**
(21) Anmeldenummer: 11186584.6
(22) Anmeldetag: 25.10.2011
(51) Int. Cl.: G01L 1/22

(54) **Messbrückenvorrichtung, Kraftmesszelle und Verfahren zum Abgleich einer Kraftmesszelle**
Measurement bridge device, force measurement cell and method for balancing a force measurement cell
Dispositif de pont de mesure, cellule de mesure de force et procédé d'égalisation d'une cellule de mesure de force

(30) Priorität: 03.11.2010 DE 102010043287
(43) Veröffentlichungstag der Anmeldung: 09.05.2012
(73) Patentinhaber: Bizerba GmbH & Co. KG, 72336 Balingen (DE)
(72) Erfinder: Bolte, Jochen, 72336 Balingen (DE); Hoch, Wolfgang, 72379 Hechingen (DE)
(74) Vertreter: Hoeger, Stellrecht & Partner Patentanwälte

(56) Entgegenhaltungen:
- WO-A1-88/06719
- DE-A1-102007 017 981
- US-A1- 2003 150 276

## Beschreibung

Die Erfindung betrifft eine Messbrückenvorrichtung, insbesondere für eine Kraftmesszelle, umfassend Dehnungsmessstreifen, welche in einer Brückenschaltung angeordnet sind.

Die Erfindung betrifft weiterhin eine Kraftmesszelle.

Ferner betrifft die Erfindung ein Verfahren zum Abgleich einer Kraftmesszelle.

Beispielsweise aus der DE 10 2007 017 981 A1 ist eine Kraftmesszelle und insbesondere Wägezelle, umfassend eine erste Dehnungsmessstreifeneinrichtung und eine zweite Dehnungsmessstreifeneinrichtung bekannt.

Aus der GB 2 285 865 A ist eine Messbrückenvorrichtung bekannt, bei der über einen analogen Schalter zwischen einem Temperaturfühler und einem Messsignal umgeschaltet wird. Anhand tabellierter Werte wird dann beim Digitalisieren das Messsignal auf Basis des Temperaturwerts korrigiert.

Aus der US 2003/0150276 A1 ist ein Kraftsensor mit einer quadratischen Platte bekannt. In jeder der vier Ecken der Platte ist ein Loch angeordnet.

Aus der WO 88/06719 A1 ist ein Schaltkreis zur Verwendung in Kombination mit einem Aufnehmer vom Widerstandsbrückentyp bekannt. Der Schaltkreis umfasst Mittel zum Erzeugen eines Signals in Abhängigkeit einer Aufnehmertemperatur und Mittel zum Erzeugen einer Referenzspannung. Es sind ferner Mittel vorgesehen zum Vergleich der Aufnehmerausgabe mit der Referenzspannung, um ein Aufnehmer-Differenzsignal zu erzeugen. Es sind ferner Mittel zum Summieren des temperaturabhängigen Signals und des Aufnehmer-Differenzsignals vorgesehen, um den temperaturabhängigen Offset in dem Aufnehmerausgang zu kompensieren.

Es ist weiterhin bekannt, einen Abgleich an einer Messbrückenvorrichtung dadurch durchzuführen, dass Serienwiderstände in der Messbrückenvorrichtung manuell getrimmt werden.

Grundsätzlich können einzelne Elemente einer Messbrückenvorrichtung und insbesondere Dehnungsmessstreifen unterschiedliche Eigenschaften wie beispielsweise unterschiedliche Temperaturgänge aufweisen. Es ist deshalb vor Einsatz der Wägezelle ein Abgleich notwendig.

Der Erfindung liegt die Aufgabe zugrunde, eine Messbrückenvorrichtung der eingangs genannten Art bereitzustellen, bei welcher sich ein Abgleich auf einfache und sichere Weise über einen großen Einsatzbereich durchführen lässt.

Diese Aufgabe wird bei der eingangs genannten Messbrückenvorrichtung erfindungsgemäß dadurch gelöst, dass eine Widerstandseinrichtung vorgesehen ist, welche mindestens einen einstellbaren Digitalwiderstand aufweist, welche an die Brückenschaltung gekoppelt ist, und welche eine Mehrzahl von Widerstandssträngen aufweist, wobei ein Widerstandsstrang mindestens einen Digitalwiderstand aufweist, und eine Energieversorgungseinrichtung für den mindestens einen Digitalwiderstand, welche an eine Energieversorgungseinrichtung der Brückenschaltung gekoppelt ist, vorgesehen ist.

Erfindungsgemäß wird eine Messbrückenvorrichtung bereitgestellt, welche insbesondere analoge Ausgangssignale liefert. Ein Abgleich lässt sich digital durch Zugriff auf den mindestens einen Digitalwiderstand durchführen. Dadurch ist es auf einfache und automatisierte Weise möglich, den Abgleich beispielsweise in einer Klimakammer durchzuführen.

Es lässt sich dadurch ein Abgleich auch für unterschiedliche Temperaturwerte auf einfache und optimierte Weise erreichen. Die entsprechenden insbesondere temperaturabhängigen Widerstandswerte lassen sich beispielsweise direkt an dem mindestens einen Digitalwiderstand speichern und beim Einsatz beispielsweise der Kraftmesszelle bei einer bestimmten Temperatur verwenden.

Die Widerstandseinrichtung umfasst eine Mehrzahl von Widerstandssträngen, wobei ein Widerstandsstrang mindestens einen Digitalwiderstand aufweist. Durch entsprechende Schaltung des oder der Widerstandsstränge mit der Brückenschaltung lässt sich auf einfache Weise ein optimierter Abgleich durchführen.

Insbesondere ist eine Signalausgangseinrichtung vorgesehen, an welcher analoge Messsignale bereitgestellt sind.

Insbesondere ist eine Digitalschnittstelle vorgesehen, welche an die Widerstandseinrichtung gekoppelt ist. Über die Digitalschnittstelle lässt sich auf den mindestens einen Digitalwiderstand zugreifen und insbesondere lässt sich auf mehrere solche Digitalwiderstände zugreifen, wenn eine Mehrzahl von solchen vorhanden ist. Es kann dadurch in einer Abgleichprozedur auf automatisierte Weise ein Abgleich erfolgen.

Insbesondere ist der mindestens eine Digitalwiderstand als digitaler Potentiometer ausgebildet. Es kann dann eine automatische Widerstandseinstellung beispielsweise in einer Klimakammer erfolgen, wobei ein Abgleich in einem breiten Bereich von Temperaturwerten möglich ist.

Insbesondere umfasst der mindestens eine Digitalwiderstand eine Speichereinrichtung zur dauerhaften Speicherung von Widerstandswerten. Es lässt sich dann (mindestens) ein Widerstandswert dauerhaft speichern. Bei einer Ausführungsform lassen sich auch parameterabhängige Widerstandswerte dauerhaft speichern, wobei ein möglicher Parameter beispielsweise die Temperatur ist.

Es kann dabei vorgesehen sein, dass ein Widerstandsstrang mindestens einen Festwiderstand aufweist, welcher temperaturabhängig oder temperaturunabhängig ist. Es lässt sich dadurch ein Arbeitspunkt für die Einstellung über den mindestens einen Digitalwiderstand einstellen.

Insbesondere sind mindestens zwei Widerstandsstränge parallel geschaltet. Dadurch lässt sich beispielsweise ein Temperaturgang beim Abgleich berücksichtigen. Oft sind Digitalwiderstände nur mit relativ hohen Widerstandswerten erhältlich. Durch eine Digitalschaltung erhält man einen größeren Abgleichsbereich.

Bei einer Ausführungsform ist es vorgesehen, dass mindestens ein Widerstandsstrang mindestens einen temperaturabhängigen Widerstand aufweist. Dadurch lässt sich ein Abgleich bei einem Temperaturgang auf einfache Weise erreichen.

Es ist besonders vorteilhaft, wenn ein Widerstandsstrang ohne temperaturabhängigen Widerstand und ein Widerstandsstrang mit temperaturabhängigem Widerstand parallel geschaltet sind. Dadurch lässt sich insbesondere ein Temperaturverlauf beim Abgleich berücksichtigen und eine Temperaturkompensation erreichen. Ferner lässt sich auf einfache Weise eine Abgleichstrategie durchführen, bei der zunächst ein Nullpunktabgleich erfolgt und anschließend ein Temperaturgang berücksichtigt wird und gegebenenfalls diese Abgleichsschritte mehrmals durchlaufen werden.

Insbesondere ist mindestens ein Widerstandsstrang einem Dehnungsmessstreifen parallel geschaltet, um einen optimierten Abgleich zu erhalten.

Vorzugsweise ist mindestens ein Widerstandsstrang der Brückenschaltung und beispielsweise jeweils einem Dehnungsmessstreifen eines ersten Paars und eines zweiten Paars von Dehnungsmessstreifen parallel geschaltet. Dadurch ergibt sich bei minimiertem Schaltungsaufwand eine optimierte Abgleichbarkeit. Beispielsweise ist jeweils einem Paar der Brückenschaltung jeweils mindestens ein Widerstandsstrang zugeordnet ist, um einen optimalen Abgleich für die gesamte Brückenschaltung zu erreichen.

Es ist eine Energieversorgungseinrichtung für den mindestens einen Digitalwiderstand vorgesehen, welche an eine Energieversorgungseinrichtung der Brückenschaltung gekoppelt ist. Dadurch lässt sich der mindestens eine Digitalwiderstand gewissermaßen "intern" mit elektrischer Energie versorgen. Die Energieversorgungseinrichtung für den mindestens einen Digitalwiderstand kann dabei einen AC/DC-Wandler oder DC/AC-Wandler umfassen.

Die Brückeneinrichtung weist einen ersten Ausgang und einen zweiten Ausgang und/oder einen ersten Eingang und einen zweiten Eingang auf. Diese Ausgänge sind Signalausgänge. Über die dort anstehenden Signale lässt sich eine Kraft ermitteln. Ohne Kraftbeaufschlagung sollte ein Nullsignal an diesen Ausgängen anstehen. Über den oder die Eingänge erfolgt eine Stromeinkopplung. Insbesondere ist mindestens ein Digitalwiderstand zwischen dem ersten Ausgang und dem zweiten Ausgang und/oder dem ersten Eingang und dem zweiten Eingang angeordnet. Über diesen Digitalwiderstand lässt sich ein Ausgangswiderstand der Messbrückenvorrichtung auf einfache Weise anpassen. Dieser mindestens eine Digitalwiderstand ist dann Teil der Widerstandseinrichtung.

Es ist beispielsweise vorgesehen, dass dem ersten Eingang und/oder dem zweiten Eingang mindestens ein Digitalwiderstand zugeordnet ist und insbesondere zu diesem in Reihe geschaltet ist. Dadurch lässt sich beispielsweise ein Kennwert der Messbrückenvorrichtung einstellen.

Es ist dabei vorteilhaft, wenn dem mindestens einen Digitalwiderstand mindestens ein temperaturabhängiger Widerstand parallel geschaltet ist. Dadurch lässt sich der Kennwert temperaturabhängig einstellen.

Es kann vorteilhaft sein, wenn mindestens ein Digitalwiderstand über eine lösbare Steckverbindung an einen oder mehrere Eingänge und/oder einen oder mehrere Ausgänge der Brückenschaltung gekoppelt ist. Wenn mindestens ein Digitalwiderstand auf einem Schaltungsträger lösbar fixierbar ist, dann kann beispielsweise mit Hilfe dieses mindestens einen Digitalwiderstands ein Abgleichvorgang durchgeführt werden und nach Abschluss des Abgleichvorgangs kann der Digitalwiderstand durch einen in der Regel kostengünstigeren Festwiderstand ersetzt werden. Es wird dabei der Widerstandswert des eingestellten mindestens einen Digitalwiderstands ermittelt und dieser Widerstandwert wird für den Festwiderstand benutzt.

Aus dem gleichen Grund ist es günstig, wenn dem ersten Eingang und/oder dem zweiten Eingang mindestens ein temperaturabhängiger Widerstand zugeordnet ist.

Die erfindungsgemäße Messbrückenvorrichtung lässt sich in einer Kraftmesszelle und insbesondere Wägezelle einsetzen.

Der Erfindung liegt ferner die Aufgabe zugrunde, ein Verfahren zum Abgleich einer erfindungsgemäßen Kraftmesszelle bereitzustellen, welches automatisiert durchführbar ist.

Diese Aufgabe wird bei dem genannten Verfahren erfindungsgemäß dadurch gelöst, dass die Kraftmesszelle in einer Klimakammer positioniert ist und definierte Temperaturverläufe in der Klimakammer durchfahren werden und dabei der mindestens eine Digitalwiderstand in seinem Widerstandswert automatisch eingestellt wird.

Man erhält dadurch einen automatischen Abgleich für einen breiten Einsatzbereich. Während des Abgleichsvorgangs muss keine manuelle Einstellung vorgesehen werden.

Bei einer Ausführungsform ist es vorgesehen, dass über den mindestens einen Digitalwiderstand ein fester und insbesondere auch temperaturunabhängiger Widerstandswert eingestellt wird. Der eingestellte Widerstandswert wird dabei so gewählt, dass die Temperaturabhängigkeit in einem gewissen Temperaturbereich möglichst gering ist.

Bei einer alternativen Ausführungsform wird der eingestellte Wert des mindestens einen Digitalwiderstands für die jeweilige Temperatur gespeichert. Im Betrieb einer entsprechenden Wägezelle kann dann bei bekannter Temperatur, welche beispielsweise über einen Temperatursensor an der Wägezelle ermittelt wird, der jeweilige optimale Widerstandswert an dem mindestens einen Digitalwiderstand eingestellt werden. Dadurch lässt sich eine exakte Temperaturkompensation auch in einem breiten Temperaturbereich erreichen.

Bei einer Ausführungsform wird ein Abgleich nur entweder an einem ersten Paar von Dehnungsmessstreifen oder einem zweiten Paar von Dehnungsmessstreifen durchgeführt, wobei diejenigen Widerstände oder Widerstandsstränge, mit denen kein Abgleich durchgeführt wird, abgeschaltet werden. Dadurch ist gewissermaßen eine Einpunktregelung durchführbar. Es wird geprüft, ob ein Offset vorliegt (positiv oder negativ) und es wird dann in Richtung Null abgeglichen.

Es erfolgt dazu die Abschaltung über einen Schalter oder Hochsetzen eines Widerstandswerts.

Insbesondere erfolgt ein Abgleich an dem Paar, an dem abgeglichen wird, als Ausgleich eines Nullpunkt-Offsets. Es ergibt sich dadurch nur eine Richtung für den Abgleich, nämlich in Richtung Null. Es muss insbesondere keine Zweipunkt-Regelung an beiden Paaren durchgeführt werden.

Bei einer Ausführungsform ist es vorgesehen, dass bei einem Abgleichvorgang (insbesondere an einem Paar) zuerst ein Nullpunktabgleich (insbesondere bei einer Referenztemperatur) erfolgt und anschließend ein Temperaturgang abgeglichen wird.

Es erfolgt dabei insbesondere nach Abgleich eines Temperaturgangs ein weiterer Nullpunktabgleich, da ein Abgleich eines Temperaturgangs den Nullpunkt wieder verschieben kann. Nach einmaligem und mehrmaligem Durchlaufen einer entsprechenden Schleife erhält man dann einen optimierten Abgleich.

Ferner ist es günstig, wenn während eines Abgleichvorgangs der Widerstandswert mindestens eines Digitalwiderstands zwischen Eingängen und/oder Ausgängen der Brückenschaltung angepasst wird. Dadurch lässt sich auf optimierte Weise ein Ausgangswiderstand einstellen.

Es kann günstig sein, wenn in einem letzten Schritt mindestens ein Digitalwiderstand durch einen Festwiderstand mit gleichem Widerstandswert ersetzt wird. Dadurch lässt sich die entsprechende Messbrückenvorrichtung kostengünstig realisieren.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels einer Kraftmesszelle (Wägezelle);
- Figur 2: eine Detaildarstellung der Kraftmesszelle gemäß Figur 1; und
- Figur 3: schematisch ein Ausführungsbeispiel einer erfindungsgemäßen Messbrückenvorrichtung.

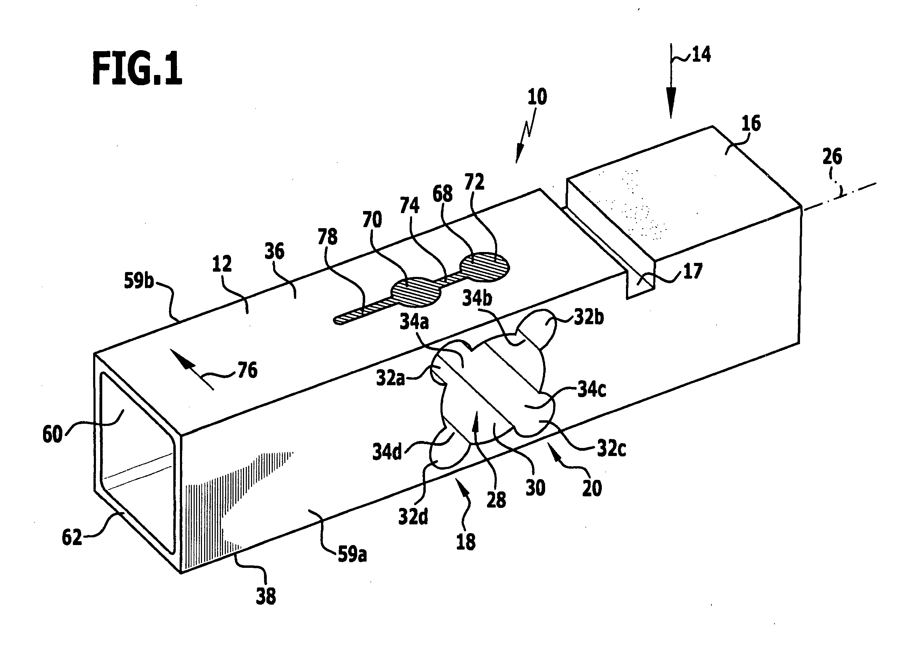

Ein Ausführungsbeispiel einer Kraftmesszelle, welches in Figur 1 gezeigt und dort mit 10 bezeichnet ist, umfasst einen Biegestab 12. Die Kraftmesszelle 10 ist beispielsweise als Wägezelle ausgebildet, wobei eine Gewichtskraft auf den Biegestab 12 einwirkbar ist. Die einwirkende Kraft ist in Figur 1 mit dem Bezugszeichen 14 angedeutet. Die Kraft wirkt auf einen Einleitungsbereich 16. Der Einleitungsbereich 16 ist über eine Entkopplungsnut 17 von einem Messbereich getrennt. Dadurch werden beispielsweise Anschraubspannungen, die von einer Krafteinleitungseinrichtung herrühren, die an den Biegestab 12 jenseits der Entkopplungsnut 17 angeschraubt ist, nicht in den Messbereich eingebracht.

Der Biegestab 12 ist beispielsweise quaderförmig (zumindest bezogen auf seine Hüllflächen) ausgebildet. Er ist aus einem metallischen Material hergestellt, welches insbesondere nicht korrosiv ist. Beispielsweise ist der Biegestab 12 aus Federstahl hergestellt.

Der Biegestab 12 weist eine erste Schwächungszone 18 und eine zweite Schwächungszone 20 auf. An den Schwächungszonen 18, 20 ist eine elastische Verformung des Biegestabs 12 möglich, welche durch die Kraft 14 bewirkt wird. Diese elastische Verformung ist über eine erste Dehnungsmessstreifeneinrichtung 22 und eine zweite Dehnungsmessstreifeneinrichtung 24 ermittelbar. Aus dieser Verformung wiederum kann die Kraft ermittelt werden.

Die erste Dehnungsmessstreifeneinrichtung 22 weist beispielsweise ein Paar von Dehnungsmessstreifen auf und die zweite Dehnungsmessstreifeneinrichtung 24 weist ebenfalls beispielsweise ein Paar von Dehnungsmessstreifen auf. Die beiden Paare von Dehnungsmessstreifen sind in einer Brückenschaltung zu einer Vollbrücke miteinander verschaltet.

Die Brückenschaltung ist in einer alternativen Ausführungsform eine Halbbrückenschaltung mit zwei Festwiderständen.

Es ist auch grundsätzlich möglich, dass die Dehnungsmessstreifeneinrichtung 22 und die Dehnungsmessstreifeneinrichtung 24 jeweils nur einen einzigen Dehnungsmessstreifen aufweisen und an einer anderen Stelle des Biegestabs 12 in einer entsprechenden Aufnahme eine dritte Dehnungsmessstreifeneinrichtung und eine vierte Dehnungsmessstreifeneinrichtung jeweils mit einem Dehnungsmessstreifen vorgesehen sind. Diese vier Dehnungsmessstreifen können dann in einer Brückenschaltung verbunden sein, wobei beispielsweise zwei Halbbrücken zu einer Vollbrücke verschaltet sind.

Der Biegestab 12 hat seine längste Erstreckung in einer Erstreckungsrichtung 26. Quer und insbesondere senkrecht zu dieser Erstreckungsrichtung 26 liegt eine durchgehende Öffnung 28. Diese Öffnung 28 ist im Vollmaterial des Biegestabs 12 gebildet. Die Öffnung 28 weist einen ersten Bereich 30 auf, welcher hohlzylindrisch ausgebildet ist. An dem ersten Bereich 30 sind hohlzylindrische zweite Bereiche 32a, 32b, 32c, 32d angeordnet. Zylinderachsen dieser zweiten Bereiche 32a, 32b, 32c, 32d liegen jeweils parallel zu der Zylinderachse des ersten Bereichs 30, wobei die Zylinderradien der zweiten Bereiche 32a, 32b, 32c, 32d jeweils kleiner sind als der Zylinderradius des ersten Bereichs 30. Die zweiten Bereiche 32a, 32b, 32c, 32d weisen jeweilige Verbindungsbereiche 34a, 34b, 34c, 34d auf, mit welchen sie mit dem ersten Bereich 30 verbunden sind und zu diesem offen sind.

Die zweiten Bereiche 32a, 32b, 32c, 32d sind symmetrisch versetzt zueinander angeordnet. Benachbarte zweite Bereiche (die Bereiche 32a und 32b, die Bereiche 32b und 32c, die Bereiche 32c und 32d, die Bereiche 32d und 32a) liegen in einem radialen Winkel von 90° zueinander.

Durch die Bereiche 32a und 32d ist die erste Schwächungszone 18 gebildet und durch die Bereiche 32b und 32c ist die zweite Schwächungszone 20 gebildet. Eine Wanddicke des Biegestabs 12 bezogen auf eine erste Oberfläche 36 des Biegestabs 12 bzw. eine gegenüberliegende zweite Oberfläche 38 des Biegestabs 12 ist an den jeweiligen zweiten Bereichen am geringsten.

Die zweiten Bereiche 32a, 32b, 32c, 32d sind parallelogrammartig zueinander angeordnet, um eine entsprechende Verformung des Biegestabs 12 an der Öffnung 28 zu ermöglichen.

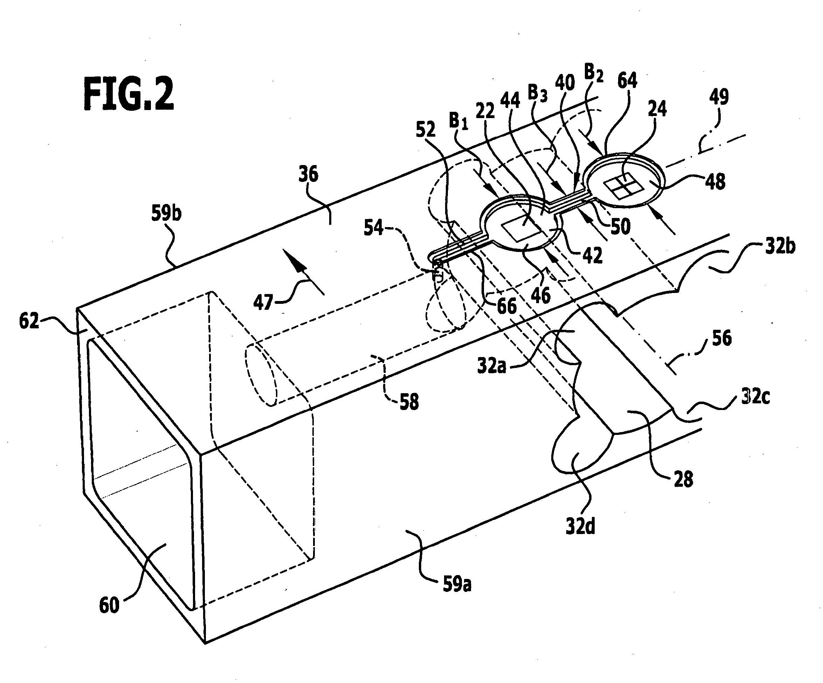

An der ersten Oberfläche 36 ist eine Aufnahme 40 (Figur 2) für die erste Dehnungsmessstreifeneinrichtung 22 und die zweite Dehnungsmessstreifeneinrichtung 24 gebildet. Die Aufnahme ist als Aufnahmenut 42 ausgebildet, welche eine Vertiefung an der ersten Oberfläche 36 ist. Eine typische Höhe dieser Aufnahmenut 42 bezogen auf einen Aufnahmenutgrund 44 bis zu der ersten Oberfläche 36 (außerhalb der Aufnahmenut 42) liegt in der Größenordnung von 1 mm oder weniger.

Die Aufnahme 40 weist einen ersten Aufnahmebereich 46 für den ersten Dehnungsmessstreifen 22 auf. Ferner weist sie einen zweiten Aufnahmebereich 48 für die zweite Dehnungsmessstreifeneinrichtung 24 auf. Der erste Aufnahmebereich 46 weist in einer Richtung 47 eine Breite B₁ auf. Die Richtung 47 liegt dabei quer und insbesondere senkrecht zu einer Verbindungsrichtung 49 zwischen der ersten Dehnungsmessstreifeneinrichtung 22 und der zweiten Dehnungsmessstreifeneinrichtung 24 bzw. zwischen dem ersten Aufnahmebereich 46 und dem zweiten Aufnahmebereich 48. Die Verbindungsrichtung 49 ist dabei parallel zur Erstreckungsrichtung 26. Der zweite Aufnahmebereich 48 weist in der Richtung 47 eine Breite B₂ auf. In der Aufnahme 40 ist in dem ersten Aufnahmebereich 46 entsprechend die erste Dehnungsmessstreifeneinrichtung 22 positioniert. In dem zweiten Aufnahmebereich 48 ist die zweite Dehnungsmessstreifeneinrichtung 24 positioniert. Er ist beispielsweise an den entsprechenden Aufnahmenutgrund 44 angeklebt.

Der erste Aufnahmebereich 46 ist beispielsweise hohlzylindrisch ausgebildet. Ferner ist der zweite Aufnahmebereich 48 hohlzylindrisch ausgebildet. Eine Querschnittsfläche jeweils des ersten Aufnahmebereichs 46 und des zweiten Aufnahmebereichs 48 ist größer als die entsprechende Querschnittsfläche der ersten Dehnungsmessstreifeneinrichtung 22 bzw. der zweiten Dehnungsmessstreifeneinrichtung 24.

Zwischen dem ersten Aufnahmebereich 46 und dem zweiten Aufnahmebereich 48 ist ein dritter Aufnahmebereich 50 angeordnet. Durch diesen dritten Aufnahmebereich sind der erste Aufnahmebereich 46 und der zweite Aufnahmebereich 48 miteinander verbunden. Der dritte Aufnahmebereich 50 weist eine mindestens näherungsweise quaderförmige Gestalt auf, wobei dieser Quader vorzugsweise parallel zu der Erstreckungsrichtung 26 ausgerichtet ist. Der dritte Aufnahmebereich 50 dient zur Führung von einer oder mehreren Leitungen (beispielsweise in der Form von Kabeln oder Flachbandleitungen) zwischen dem ersten Aufnahmebereich 46 und dem zweiten Aufnahmebereich 48. Über den dritten Aufnahmebereich 50 lassen sich Leitungen an der Aufnahme 40 führen.

Der dritte Aufnahmebereich 50 ist vorzugsweise symmetrisch zu dem ersten Aufnahmebereich 46 und dem zweiten Aufnahmebereich 48 angeordnet. Eine Mittellinie des dritten Aufnahmebereichs 50 fällt dadurch mit einer Durchmesserlinie des ersten Aufnahmebereichs 46 und mit einer Durchmesserlinie des zweiten Aufnahmebereichs 48 zusammen.

Der dritte Aufnahmebereich 50 weist eine Breite B₃ (quer zur Erstreckungsrichtung 26 und insbesondere senkrecht dazu) auf, welche kleiner ist als die entsprechende Breite B₁ des ersten Aufnahmebereichs 46 und die entsprechende Breite B₂ des zweiten Aufnahmebereichs 48. Wenn die Aufnahmebereiche 46 und 48 zylindrisch ausgebildet sind, dann entspricht deren Breite B₁, B₂ dem Durchmesser des Zylinderbereichs. Vorzugsweise ist die Breite B₃ des dritten Aufnahmebereichs 50 höchstens 35 % der Breite B₁, B₂ des ersten Aufnahmebereichs 46 bzw. des zweiten Aufnahmebereichs 48.

Weiterhin ist die Breite B₃ des dritten Aufnahmebereichs 50 kleiner als die Breite der ersten Dehnungsmessstreifeneinrichtung 22 und der zweiten Dehnungsmessstreifeneinrichtung 24. (Letztere sind bezogen auf die Richtung 47 quer zur Erstreckungsrichtung 26 symmetrisch in dem jeweiligen Aufnahmebereich 46, 48 angeordnet.) Beispielsweise ist die Breite B₃ des dritten Aufnahmebereichs 50 höchstens 60 % der Breite der ersten Dehnungsmessstreifeneinrichtung 22 bzw. der zweiten Dehnungsmessstreifeneinrichtung 24.

An den ersten Aufnahmebereich 46 schließt sich ein vierter Aufnahmebereich 52 an, welcher insbesondere hohlquaderförmig ausgebildet ist. Er ist fluchtend mit dem dritten Aufnahmebereich 50 ausgerichtet und weist vorzugsweise die gleiche Breite und Höhe wie der dritte Aufnahmebereich 50 auf. Eine Mittellinie des vierten Aufnahmebereichs 52 fällt mit einer Mittellinie des dritten Aufnahmebereichs 50 zusammen.

Über den vierten Aufnahmebereich 52 lassen sich Leitungen von dem ersten Aufnahmebereich 46 wegführen. Der vierte Aufnahmebereich 52 mündet in einen Leitungskanal 54, welcher in dem Biegestab 12 angeordnet ist. Dieser Leitungskanal 54 ist insbesondere als Bohrung hergestellt. Er ist quer und beispielsweise senkrecht zu der Erstreckungsrichtung 26 orientiert. Er kann auch schräg zu der Erstreckungsrichtung 26 orientiert sein. Ferner ist er quer und insbesondere senkrecht zu einer Achse 56 der Öffnung 28 orientiert.

Der Leitungskanal 54 mündet in einen weiteren Leitungskanal 58, welcher in dem Biegestab 12 beispielsweise über eine Bohrung gebildet ist. Dieser Leitungskanal 58 ist insbesondere mittig zwischen gegenüberliegenden Seiten 59a, 59b des Biegestabs 12 angeordnet. Er ist beispielsweise parallel zur Erstreckungsrichtung 26 orientiert. Er kann auch direkt in den vierten Aufnahmebereich 52 münden, ohne dass ein Kanal entsprechend dem Leitungskanal 54 vorgesehen ist; dann verläuft er insbesondere schräg.

Der weitere Leitungskanal 58 führt zu einer Ausnehmung 60 am Biegestab 12, welche zu einem stirnseitigen Ende 62 des Biegestabs 12 hin offen ist. Diese Ausnehmung 60 ist insbesondere hohlquaderförmig. In der Ausnehmung 60 ist eine Auswertungseinrichtung (in der Zeichnung nicht gezeigt) der Kraftmesszelle 10 angeordnet. Zu dieser Auswertungseinrichtung führen durch die Leitungskanäle 54 und 58 Leitungen von der ersten Dehnungsmessstreifeneinrichtung 22 und der zweiten Dehnungsmessstreifeneinrichtung 24. Letztere sind insbesondere in einer Brückenschaltung geschaltet. Die Auswertungseinrichtung umfasst beispielsweise einen Analog-Digital-Wandler zur Bereitstellung eines digitalen Kraftsignals bzw. Wägesignals. Die Auswertungseinrichtung ermittelt dieses Signal aus den Signalen der Dehnungsmessstreifeneinrichtung 22 und 24.

Die Brückenschaltung kann beispielsweise als Halbbrückenschaltung ausgebildet sein, wenn insgesamt nur zwei Dehnungsmessstreifen in der Aufnahme 40 angeordnet sind. Sie kann als Vollbrückenschaltung ausgebildet sein, wenn vier Dehnungsmessstreifen vorgesehen sind. Bei einer Vollbrücke können in der Aufnahme 40 insgesamt vier Dehnungsmessstreifen (jeweils zwei Paare von Dehnungsmessstreifen) angeordnet sein oder es kann zusätzlich zu der Aufnahme 40 eine weitere Aufnahme beispielsweise an einer gegenüberliegenden Seite des Biegestabs 12 angeordnet sein, in der auch Dehnungsmessstreifen (verschaltet als Halbbrücke) angeordnet sind.

Die Auswertungseinrichtung ist in der Ausnehmung 60 gekapselt angeordnet. Sie ist gegenüber dem Eindringen von Gasen und Flüssigkeiten geschützt. Dazu ist an der Ausnehmung 60 ein entsprechender Deckel angeordnet (in der Zeichnung nicht gezeigt) und/oder die Auswertungseinrichtung sitzt in der Ausnehmung 60 vergossen. Insbesondere ist die Auswertungseinrichtung so gekapselt, dass die Schutzklasse IP 69 K erreicht ist.

Der erste Aufnahmebereich 46 ist der ersten Schwächungszone 18 zugeordnet und der zweite Aufnahmebereich 48 ist der zweiten Schwächungszone 20 zugeordnet. Insbesondere sitzt der erste Aufnahmebereich 46 und damit die erste Dehnungsmessstreifeneinrichtung 22 direkt oberhalb des zweiten Bereichs 32a und der zweite Aufnahmebereich 48 und die zweite Dehnungsmessstreifeneinrichtung 24 sitzen direkt oberhalb des zweiten Bereichs 32b.

Die Aufnahme 40 mit dem ersten Aufnahmebereich 46, dem zweiten Aufnahmebereich 48 und dem dazwischen angeordneten stegartigen Aufnahmebereich 50 hat die Gestalt einer ebenen Hantel.

An der Aufnahme 40 ist ein Anlagebereich 64 angeordnet, welcher an einem Rand der Aufnahme 40 über die ganze Aufnahme 40 umläuft. Dieser Anlagebereich 64 liegt beabstandet zu dem Aufnahmenutgrund 44 oberhalb von diesem. Durch den Anlagebereich 64 ist eine Anlagefläche 66 bereitgestellt. Diese Anlagefläche 66 ist eben. Durch die Anlagefläche 66 ist der Anlagebereich 64 stufenförmig ausgebildet.

Die Anlagefläche 66 liegt in einer Höhe über dem Aufnahmenutgrund 44, welche mindestens so hoch ist wie die erste Dehnungsmessstreifeneinrichtung 22 bzw. die zweite Dehnungsmessstreifeneinrichtung 24 und insbesondere höher ist.

Über die Anlagefläche 66 ist ein Metalldeckel 68 mit der Aufnahmenut 42 verbunden. Beispielsweise durch Laserschweißung sitzt der Metalldeckel 68 fest an der Aufnahme 40 und deckt die erste Dehnungsmessstreifeneinrichtung 22 und die zweite Dehnungsmessstreifeneinrichtung 24 nach außen ab. Er dichtet einen entsprechenden Aufnahmeraum nach außen ab, wobei die Abdichtung fluiddicht und gasdicht ist. Insbesondere wird eine Schutzklasse IP 69 K erreicht.

Es kann dabei vorgesehen sein, dass bei der Herstellung der Kraftmesszelle 10 in dem entsprechenden Aufnahmeraum ein Schutzgas eingebracht wird oder der Aufnahmeraum evakuiert wird.

Der Metalldeckel 68 ist vorzugsweise bündig mit der ersten Oberfläche 36. In diesem Falle entspricht eine Dicke des Metalldeckels 68 dem Abstand zwischen der Anlagefläche 66 und der ersten Oberfläche 36.

Der Metalldeckel 68 ist eben ausgebildet. Er weist einen ersten Deckelbereich 70 zur Abdeckung des ersten Aufnahmebereichs 46 und einen zweiten Deckelbereich 72 zur Abdeckung des zweiten Aufnahmebereichs 48 auf. Weiterhin hat er einen Stegbereich 74, welcher den ersten Deckelbereich 70 und den zweiten Deckelbereich 72 verbindet. Der Stegbereich 74 dichtet den dritten Aufnahmebereich 50 ab. Entsprechend hat der Stegbereich 74 eine kleinere Breite (in einer Richtung 76 quer zur Erstreckungsrichtung 26) als der erste Deckelbereich 70 und der zweite Deckelbereich 72; die Breite des Stegbereichs 74 ist im Wesentlichen B₃. Der erste Deckelbereich 70 und der zweite Deckelbereich 72 haben insbesondere die Form einer Kreisscheibe. Der Stegbereich 74 ist quaderförmig. Der Deckelbereich 70 hat im Wesentlichen die Breite B₁ und der Deckelbereich 72 hat im Wesentlichen die Breite B₂.

An dem ersten Deckelbereich 70 ist ein weiterer Stegbereich 78 angeordnet, welcher zur Abdeckung des vierten Aufnahmebereichs 54 dient.

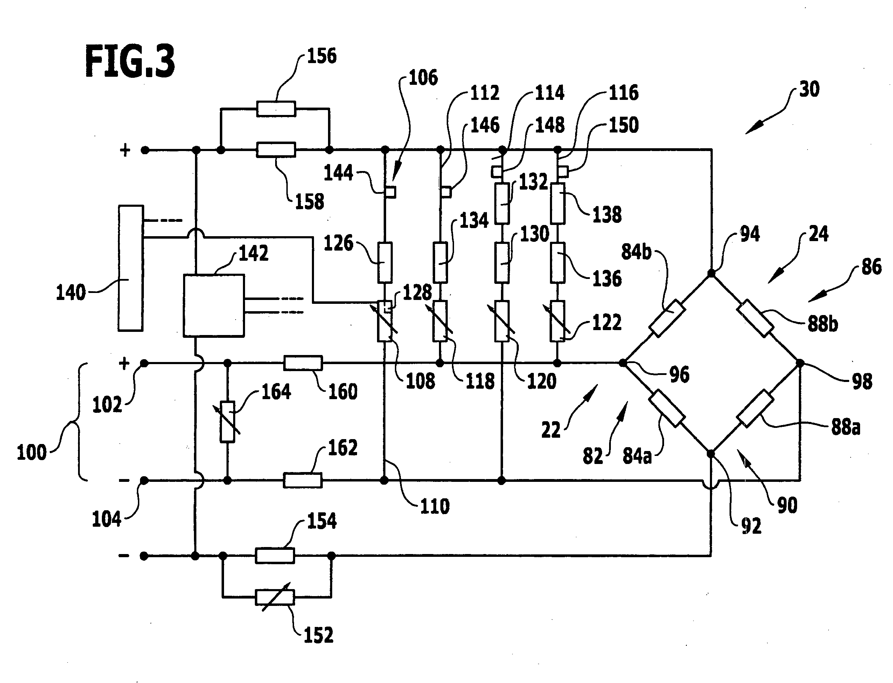

Ein Ausführungsbeispiel einer erfindungsgemäßen Messbrückenvorrichtung 80, welches in Figur 3 schematisch gezeigt ist, ist an der Kraftmesszelle 10 angeordnet. Die Messbrückenvorrichtung 80 umfasst beispielsweise ein erstes Paar 82 von Dehnungsmessstreifen 84a, 84b und ein zweites Paar 86 von Dehnungsmessstreifen 88a, 88b. Die erste Dehnungsmessstreifeneinrichtung 22 ist beispielsweise durch die Dehnungsmessstreifen 84a und 88b realisiert. Die zweite Dehnungsmessstreifeneinrichtung 24 ist durch die Dehnungsmessstreifen 84b und 88a realisiert. Die Dehnungsmessstreifen 84a, 84b und 88a, 88b sind in einer Brückenschaltung 90 angeordnet. Dazu sind die Dehnungsmessstreifen 84a, 84b des ersten Paars 82 in Reihe mit entgegengesetzter Orientierung angeordnet. Ferner sind die Dehnungsmessstreifen 88a, 88b des zweiten Paars 86 in Reihe mit entgegengesetzter Orientierung angeordnet. Die Anordnung der Dehnungsmessstreifen 84a, 84b, 88a, 88b ermöglicht Kraftmessungen auf Zug und Druck. Das erste Paar 82 und das zweite Paar 86 sind parallel zueinander angeordnet. Die Brückenschaltung 90 weist dabei einen ersten Eingang 92 und einen zweiten Eingang 94 auf, welcher zwischen den Paaren 82 und 86 liegt. Die Eingänge 92 und 94 bilden gewissermaßen Eingangsklemmen.

Ferner umfasst die Brückenschaltung 90 einen ersten Ausgang 96 und einen zweiten Ausgang 98. Der erste Ausgang 96 liegt zwischen den Dehnungsmessstreifen 84a, 84b des ersten Paars 82. Der zweite Ausgang 98 liegt zwischen den Dehnungsmessstreifen 88a, 88b des zweiten Paars 86. Die Ausgänge 96 und 98 bilden gewissermaßen Ausgangsklemmen der Brückenschaltung 90.

Bei ideal abgeglichener Messbrückenvorrichtung 80 und ohne wirkende Kraft sollte ein Differenzsignal für die Signale am ersten Ausgang 96 und am zweiten Ausgang 98 ein Nullsignal sein. Bei einer wirkenden Kraft lässt sich die Größe dieser Kraft über entsprechende Ausgangssignale an einer Signalausgangseinrichtung 100 bestimmen. Die Signalausgangseinrichtung 100 umfasst einen ersten Ausgang 102, welcher signalwirksam mit dem ersten Ausgang 96 der Brückenschaltung 90 verbunden ist. Ferner umfasst die Signalausgangseinrichtung 100 einen zweiten Ausgang 104, welcher signalwirksam mit dem zweiten Ausgang 98 der Brückenschaltung 90 verbunden ist. Die Ausgangssignale der Signalausgangseinrichtung 100, welche von extern abgreifbar sind, sind analoge Signale; die Messbrückenvorrichtung 80 stellt direkt analoge Signale bereit.

Die Messbrückenvorrichtung 80 umfasst eine Widerstandseinrichtung 106 mit Digitalwiderständen 108 usw. Die Widerstandseinrichtung 106 weist dabei eine Mehrzahl von Widerstandssträngen 110, 112, 114, 116 auf, wobei jeder Widerstandsstrang (mindestens) einen Digitalwiderstand aufweist. Der Widerstandsstrang 110 weist den Digitalwiderstand 108 auf. Der Widerstandsstrang 112 weist den Digitalwiderstand 118 auf. Der Widerstandsstrang 114 weist den Digitalwiderstand 120 auf. Der Widerstandsstrang 116 weist den Digitalwiderstand 122 auf. Bei dem gezeigten Ausführungsbeispiel ist der Widerstandsstrang 110 dem Dehnungsmessstreifen 88b zugeordnet und parallel zu diesem geschaltet. Der Widerstandsstrang 110 weist dabei mindestens einen (Fest-)Widerstand 126 auf, zu welchem der Digitalwiderstand 108 in Reihe geschaltet ist. Der Widerstand 126 weist einen Festwert auf. Der Digitalwiderstand 108 ist ein Digitalpotentiometer, dessen Widerstandswert einstellbar ist. Der Digitalwiderstand 108 umfasst ferner eine integrierte Speichereinrichtung 128, in welcher ein eingestellter Widerstandwert dauerhaft gespeichert ist.

Die Speichereinrichtung 128 kann dabei beispielsweise eine Mehrzahl von Widerstandswerten speichern, wobei die Widerstandswerte insbesondere abhängig von der Temperatur sind.

Ein Widerstandswert ist fix, wobei er in Kombination mit der Parallelschaltung wieder temperaturabhängig ist. Mit den Digitalwiderständen 120, 122 kann die Temperaturabhängigkeit abgeglichen werden.

Der Widerstandsstrang 114 ist dem Widerstandsstrang 106 parallel geschaltet. Der Widerstandsstrang 114 weist den Digitalwiderstand 120 auf, zu dem ein weiterer (Fest-)Widerstand 130 und ein temperaturabhängiger Widerstand 132 in Reihe geschaltet sind.

Der Widerstandsstrang 112 ist zu dem Dehnungsmessstreifen 84b parallel geschaltet. Er umfasst den Digitalwiderstand 118, zu dem (mindestens) ein weiterer Widerstand 134 in Serie geschaltet ist.

Der Strang 116 ist zu dem Strang 112 parallel geschaltet, wobei der Strang 116 den Digitalwiderstand 122, (mindestens) einen weiteren Widerstand 136 und einen temperaturabhängigen Widerstand 138 umfasst.

Durch die Widerstandseinrichtung 106 ist jeweils mindestens ein Digitalwiderstand mindestens einem Dehnungsmessstreifen des ersten Paars 82 und des zweiten Paars 86 parallel geschaltet. Es ist grundsätzlich möglich, dass Digitalwiderstände nur den Dehnungsmessstreifen 88b und 84a oder nur 84b und 88a parallel geschaltet sind oder allen Dehnungsmessstreifen parallel geschaltet sind. Bevorzugt ist es, wenn mindestens einem Dehnungsmessstreifen eines Paars mindestens ein Digitalwiderstand parallel geschaltet ist.

Die Messbrückenvorrichtung 80 umfasst eine Digitalschnittstelle 140, über welche die Digitalwiderstände 108, 118, 120, 122 ansteuerbar sind und diese insbesondere einstellbar sind.

Die Messbrückenvorrichtung weist ferner eine Energieversorgungseinrichtung 142 für die Digitalwiderstände 108, 118, 120, 122 auf. Über diese lassen sich die genannten Digitalwiderstände insbesondere zur Einstellung der Widerstandswerte mit Energie versorgen. Die Energieversorgungseinrichtung 142 ist bei einer Ausführungsform dabei an die Energieversorgungseinrichtung der Messbrückenvorrichtung 80 und insbesondere der Brückenschaltung 90 gekoppelt.

Es kann auch eine eigene Spannungsversorgung beispielsweise in Form einer Batterie vorgesehen sein.

Die Dehnungsmessstreifen 84a, 84b, 88a, 88b sind auf einem Wägezellenkörper angeordnet. Die Digitalwiderstände 108, 118, 120, 122 sind auf der gleichen Platine wie die analogen Widerständen 126, 130, 132 usw. oder auf einer separaten Platine angeordnet. Die Verbindung der Platinen, wenn diese separat sind, erfolgt dann beispielsweise über eine Steckbrücke oder Kabel.

Es kann vorgesehen sein, dass ein Widerstandsstrang 110 bzw. 112 bzw. 114 bzw. 116 einen jeweils in Serie geschalteten Schalter und insbesondere Analogschalter 144 bzw. 146 bzw. 148 bzw. 150 aufweist. Durch einen solchen Schalter 144, 146, 148, 150 lässt sich der zugeordnete Widerstandsstrang 110, 112, 114, 116 bei einem Abgleichvorgang abschalten, wie unten noch näher erläutert wird.

Dem ersten Eingang 92 der Brückenschaltung 90 ist (mindestens) ein Digitalwiderstand 152 zugeordnet. Dieser ist parallel zu (mindestens) einem temperaturabhängigen Widerstand 154 geschaltet. Über den Digitalwiderstand 152 lässt sich temperaturabhängig ein Kennwert der Messbrückenvorrichtung 80 einstellen. In der Regel ist es nur ein Widerstandswert, der für einen größeren Temperaturbereich gültig ist.

Dem zweiten Eingang 94 ist ein Widerstand 156 zugeordnet, zu welchem ein temperaturabhängiger Widerstand 158 parallel geschaltet ist.

Dem ersten Ausgang 96 ist (mindestens) ein Widerstand 160 zugeordnet, welcher zu diesem in Reihe geschaltet ist. Ferner ist dem zweiten Ausgang 98 (mindestens) ein Widerstand 162 zugeordnet und insbesondere zu diesem in Reihe geschaltet. Über die Widerstände 160 und 162 lässt sich ein Ausgangswiderstand der Messbrückenvorrichtung 80 einstellen.

Zwischen dem ersten Ausgang 96 und dem zweiten Ausgang 98 ist (mindestens) ein Digitalwiderstand 164 angeordnet, über welchen ebenfalls ein Abgleich durchführbar ist.

Die Digitalwiderstände 152 und 156 werden ebenfalls von der Digitalschnittstelle 140 angesteuert und über die Energieversorgungseinrichtung 142 mit elektrischer Energie versorgt.

Typische Widerstandswerte der Widerstände 160 und 162 liegen zwischen 0 und 100 Ω.

Ein typischer einstellbarer Widerstandswert R5 des Widerstands 156 liegt bei 50 Ω bis 2,5 kΩ.

Typische Widerstandswerte R1, R2, R3, R4 der Widerstände 126, 134, 130, 136 liegen ungefähr bei 100 kΩ.

Typische Widerstandswerte θ1 der Widerstände 132 und 138 liegen bei 10 kΩ. Beispielsweise werden Nickelwiderstände verwendet.

Typische Widerstandswerte θ2 der Widerstände 154 und 158 liegen bei 30 Ω. Beispielsweise werden entsprechende Nickelwiderstände verwendet. Der entsprechende Widerstandswert (mit hohem Temperaturkoeffizienten) sollte dabei angepasst werden an den mittleren Temperaturkoeffizienten eines Kennwerts der Messbrückenvorrichtung. Dieser wiederum hängt bei Kraftmesszellen vom Brückenwiderstand ab und vom Material der Dehnungsmessstreifen sowie vom Grundkörpermaterial.

Der Digitalwiderstand 108 ist beispielsweise ein Nullpunkt-Potentiometer ausgehend von einem Widerstandswert von ungefähr 1,5 MΩ. Auf die ähnliche oder gleiche Weise kann auch der Digitalwiderstand 118 ausgebildet sein. Gleiches gilt für die Digitalwiderstände 120 und 122, wobei hier eine starke Temperaturabhängigkeit vorliegt. Die Digitalwiderstände 120, 122 können aber auch für einen bestimmten Temperaturbereich fix sein.

Der Digitalwiderstand 164 bildet beispielsweise ein 100 kΩ-Potentiometer für eine Grobeinstellung. Es kann ein zweites Potentiometer mit kleinerem Arbeitspunktswert für eine Feineinstellung in Reihe geschaltet sein.

Der Digitalwiderstand 152 bildet beispielsweise ein 2,5 kΩ-Potentiometer.

Über die Digitalschnittstelle 140 kann durch entsprechende Ansteuerung ein Abgleich und insbesondere automatischer Abgleich der entsprechenden Kraftmesszelle 10 erfolgen.

Dazu wird diese in einer Klimakammer positioniert, in welcher Temperaturverläufe durchfahren werden. Es erfolgt ein automatischer Abgleich.

Bei einer Ausführungsform werden ein oder mehrere Digitalwiderstände so fest eingestellt, dass innerhalb eines Temperaturbereichs eine möglichst geringe Temperaturvariation vorliegt. Bei einer alternativen Ausführungsform werden zu jedem Temperaturwert entsprechend die Widerstandswerte der Digitalwiderstände eingestellt und diese Widerstände gespeichert. Für jede Temperatur der vorgegebenen Temperaturen erhält man dann einen optimierten Einstellungswert für jeden Digitalwiderstand der Widerstandseinrichtung 106. Diese Widerstandswerte sind in den jeweiligen Digitalwiderständen dauerhaft gespeichert und können dann beim Einsatz der Wägezelle verwendet werden.

Die Widerstände 132 und 138 gleichen die Temperaturabhängigkeit aus. Es gibt auch die Möglichkeit, die Digitalwiderstände 120, 122 mit einem Festwert zu bestimmen.

Bei einem Ausführungsbeispiel erfolgt der Abgleich gemäß folgender Strategie:
Beim Abgleich der Brückenschaltung 90 wird entweder ein negativer Offset oder ein positiver Offset ausgeglichen. Es wird dann ein Abgleich jeweils nur an einem Abgleichzweig, d. h. entweder nur an dem ersten Paar 82 oder nur an dem zweiten Paar 86 durchgeführt, wobei der Abgleich bei einem negativen Offset in "Plusrichtung" und bei einem positiven Offset in "Minusrichtung" erfolgt.

Für diesen Abgleich wird der andere Zweig (entweder das zweite Paar 86 oder das erste Paar 82) abgeschaltet. Die Abschaltung kann dabei durch Bedienung des entsprechenden Schalters 144, 146, 148, 150 erfolgen, wenn ein solcher Schalter vorgesehen ist. Es ist alternativ auch möglich, dass der nicht verwendete Abgleichzweig dadurch abgeschaltet wird, dass der entsprechende Digitalwiderstand, welcher diesem Zweig zugeordnet ist, auf einen sehr hohen Wert gesetzt wird.

Vorzugsweise wird bei einem Abgleichvorgang immer zuerst der Nullpunkt an den Digitalwiderständen 108 bzw. 118 bei einer Referenztemperatur abgeglichen. Erst anschließend erfolgt eine Abgleichung des Temperaturgangs an den Digitalwiderständen 120 bzw. 122. Es kann sich dabei durch den Abgleich des Temperaturgangs der Nullpunkt wieder verschieben. Es wird deshalb eine Schleife durchlaufen, indem wieder ein Nullpunktabgleich an dem Digitalwiderstand 108 bzw. 118 erfolgt. Wenn die entsprechende Schleife erfolgreich durchlaufen wurde, wird zuletzt der Digitalwiderstand 164 zur Anpassung des Ausgangswiderstands angepasst.

Es kann anschließend vorgesehen sein, dass ein abgeglichener Widerstand entfernt wird und durch einen Festwiderstand mit gleichem Widerstandswert ersetzt wird. Dazu ist ein entsprechender Digitalwiderstand lösbar, beispielsweise durch eine Steckverbindung, an dem entsprechenden Schaltungsträger mit der Brückenschaltung (90) verbunden.

### Bezugszeichenliste

- 10: Kraftmesszelle
- 12: Biegestab
- 14: einwirkende Kraft
- 16: Einleitungsbereich
- 18: erste Schwächungszone
- 20: zweite Schwächungszone
- 22: erste Dehnungsmessstreifeneinrichtung
- 24: zweite Dehnungsmessstreifeneinrichtung
- 26: Erstreckungsrichtung
- 28: Öffnung
- 30: erster Bereich
- 32a, b, c, d: zweiter Bereich
- 34a, b, c, d: Verbindungsbereiche
- 36: erste Oberfläche
- 38: zweite Oberfläche
- 40: Aufnahme
- 42: Aufnahmenut
- 44: Aufnahmenutgrund
- 46: erster Aufnahmebereich
- 47: Richtung
- 48: zweiter Aufnahmebereich
- 49: Verbindungsrichtung
- 50: dritter Aufnahmebereich
- 52: vierter Aufnahmebereich
- 54: Leitungskanal
- 56: Achse
- 58: Leitungskanal
- 59a, b: Seiten
- 60: Ausnehmung
- 62: stirnseitiges Ende
- 64: Anlagebereich
- 66: Anlagefläche
- 68: Metalldeckel
- 70: erster Deckelbereich
- 72: zweiter Deckelbereich
- 74: Stegbereich
- 76: Richtung
- 78: Stegbereich
- 80: Messbrückenvorrichtung
- 82: erstes Paar
- 84a, b: Dehnungsmessstreifen
- 86: zweites Paar
- 88a, b: Dehnungsmessstreifen
- 90: Brückenschaltung
- 92: erster Eingang
- 94: zweiter Eingang
- 96: erster Ausgang
- 98: zweiter Ausgang
- 100: Signalausgangseinrichtung
- 102: erster Ausgang
- 104: zweiter Ausgang
- 106: Widerstandseinrichtung
- 108: Digitalwiderstand
- 110: Widerstandsstrang
- 112: Widerstandsstrang
- 114: Widerstandsstrang
- 116: Widerstandsstrang
- 118: Digitalwiderstand
- 120: Digitalwiderstand
- 122: Digitalwiderstand
- 124: Digitalwiderstand
- 126: Widerstand
- 128: Speichereinrichtung
- 130: Widerstand
- 132: temperaturabhängiger Widerstand
- 134: Widerstand
- 136: Widerstand
- 138: temperaturabhängiger Widerstand
- 140: Digitalschnittstelle
- 142: Energieversorgungseinrichtung
- 144: Schalter
- 146: Schalter
- 148: Schalter
- 150: Schalter
- 152: Digitalwiderstand
- 154: temperaturabhängiger Widerstand
- 156: Widerstand
- 158: temperaturabhängiger Widerstand
- 160: Widerstand
- 162: Widerstand
- 164: Digitalwiderstand

## Patentansprüche

1. Messbrückenvorrichtung, insbesondere für eine Kraftmesszelle (10), umfassend Dehnungsmessstreifen (84a, 84b, 88a, 88b), welche in einer Brückenschaltung (90) angeordnet sind,
**gekennzeichnet durch** eine Widerstandseinrichtung (106), welche mindestens einen einstellbaren Digitalwiderstand (108; 118; 120; 122; 152; 164) aufweist, welche an die Brückenschaltung (90) gekoppelt ist, und welche eine Mehrzahl von Widerstandssträngen (110, 112, 114, 116) aufweist, wobei ein Widerstandsstrang (110; 112; 114; 116) mindestens einen Digitalwiderstand (108; 118; 120; 122) aufweist, und eine Energieversorgungseinrichtung (142) für den mindestens einen Digitalwiderstand (108; 118; 120; 122; 152; 156; 164), welche an eine Energieversorgungseinrichtung der Brückenschaltung (90) gekoppelt ist.

2. Messbrückenvorrichtung nach Anspruch 1, **gekennzeichnet durch** eine Signalausgangseinrichtung (100), an welcher analoge Messsignale bereitgestellt sind.

3. Messbrückenvorrichtung nach Anspruch 1 oder 2, **gekennzeichnet durch** eine Digitalschnittstelle (140), welche an die Widerstandseinrichtung (106) gekoppelt ist.

4. Messbrückenvorrichtung nach einem der vorangehenden Ansprüche, **dadurch gekennzeichnet, dass** der mindestens eine Digitalwiderstand (108; 118; 120; 122; 152; 164) als digitaler Potentiometer ausgebildet ist.

5. Messbrückenvorrichtung nach einem der vorangehenden Ansprüche, **dadurch gekennzeichnet, dass** der mindestens eine Digitalwiderstand (108; 118; 120; 122; 152; 164) eine Speichereinrichtung (128) zur dauerhaften Speicherung von Widerstandswerten umfasst.

6. Messbrückenvorrichtung nach einem der vorangehenden Ansprüche, **dadurch gekennzeichnet, dass** ein Widerstandsstrang (110; 112; 114; 116) mindestens einen Festwiderstand (126; 130, 132; 134; 136, 138) aufweist und insbesondere mindestens ein Widerstandsstrang (114; 116) mindestens einen temperaturabhängigen Widerstand (132; 138) aufweist.

7. Messbrückenvorrichtung nach einem der vorangehenden Ansprüche, **dadurch gekennzeichnet, dass** mindestens ein Widerstandsstrang (110, 114; 112, 116) einem Dehnungsmessstreifen (88b; 84b) parallel geschaltet ist.

8. Messbrückenvorrichtung nach einem der vorangehenden Ansprüche, **dadurch gekennzeichnet, dass** mindestens ein Widerstandsstrang (112, 116; 110, 114) der Brückenschaltung (90) parallel geschaltet ist.

9. Messbrückenvorrichtung nach einem der vorangehenden Ansprüche, **dadurch gekennzeichnet, dass** die Brückenschaltung (90) einen ersten Ausgang (96) und einen zweiten Ausgang (98) aufweist und/oder einen ersten Eingang (92) und einen zweiten Eingang (94) aufweist und dass mindestens ein Digitalwiderstand (164; 152) zwischen dem ersten Ausgang (96) und dem zweiten Ausgang (98) oder dem ersten Eingang (92) und dem zweiten Eingang (94) angeordnet ist.

10. Messbrückenvorrichtung nach einem der vorangehenden Ansprüche, **dadurch gekennzeichnet, dass** mindestens ein Digitalwiderstand über eine lösbare Steckverbindung an einen oder mehreren Eingängen und/oder einen oder mehreren Ausgängen der Brückenschaltung (90) gekoppelt ist, und insbesondere dass der mindestens eine Digitalwiderstand (152) zu einem temperaturabhängigen Widerstand (154) parallel geschaltet ist.

11. Messbrückenvorrichtung nach Anspruch 9 oder 10, **dadurch gekennzeichnet, dass** dem ersten Eingang (92) und/oder dem zweiten Eingang (94) mindestens ein temperaturabhängiger Widerstand (154; 158) zugeordnet ist.

12. Kraftmesszelle, insbesondere Wägezelle, welche eine Messbrückenvorrichtung (80) gemäß einem der vorangehenden Ansprüche umfasst.

13. Verfahren zum Abgleich einer Kraftmesszelle gemäß Anspruch 12, bei dem die Kraftmesszelle in einer Klimakammer positioniert ist und definierte Temperaturverläufe in der Klimakammer durchfahren werden und dabei der mindestens eine Digitalwiderstand in seinem Widerstandswert automatisch eingestellt wird.

14. Verfahren nach Anspruch 13, **dadurch gekennzeichnet, dass** der eingestellte Wert für die jeweilige Temperatur gespeichert wird, und insbesondere dass ein Abgleich entweder an einem ersten Paar von Dehnungsmessstreifen oder einem zweiten Paar von Dehnungsmessstreifen durchgeführt wird, wobei diejenigen Widerstände oder Widerstandsstränge, mit denen kein Abgleich durchgeführt wird, abgeschaltet werden, und insbesondere dass die Abschaltung über einen Schalter oder Hochsetzen eines Widerstandswerts des mindestens einen Digitalwiderstands erfolgt, und insbesondere dass ein Abgleich an dem Paar, an dem abgeglichen wird, als Ausgleich eines Nullpunkt-Offsets durchgeführt wird, und insbesondere dass bei einem Abgleichvorgang zuerst ein Nullpunkt-Abgleich erfolgt und anschließend ein Temperaturgang abgeglichen wird, und insbesondere dass nach Abgleichen eines Temperaturgangs ein erneuter Nullpunkt-Abgleich erfolgt, und insbesondere dass während eines Abgleichvorgangs der Widerstandswert mindestens eines Digitalwiderstands zwischen Eingängen und/oder Ausgängen der Brückenschaltung angepasst wird, und insbesondere dass in einem letzten Schritt mindestens ein Digitalwiderstand durch einen Festwiderstand mit gleichem Widerstandswert ersetzt wird.

## Claims

1. Measuring bridge apparatus, in particular for a force measuring cell (10), comprising strain gauges (84a, 84b, 88a, 88b) which are arranged in a bridge circuit (90),
**characterized by** a resistance device (106) which has at least one adjustable digital resistor (108; 118; 120; 122; 152; 164) and is coupled to the bridge circuit (90) and has a plurality of resistance branches (110, 112, 114, 116), wherein a resistance branch (110; 112; 114; 116) has at least one digital resistor (108; 118; 120; 122) and a power supply device (142) for the at least one digital resistor (108; 118; 120; 122; 152; 156; 164), said supply device (142) being coupled to a power supply device of the bridge circuit (90).

2. Measuring bridge apparatus in accordance with claim 1, **characterized by** a signal output device (100) at which analogue measurement signals are provided.

3. Measuring bridge apparatus in accordance with claim 1 or 2, **characterized by** a digital interface (140) which is coupled to the resistance device (106).

4. Measuring bridge apparatus in accordance with any one of the preceding claims, **characterized in that** the at least one digital resistor (108; 118; 120; 122; 152; 164) is configured as a digital potentiometer.

5. Measuring bridge apparatus in accordance with any one of the preceding claims, **characterized in that** the at least one digital resistor (108; 118; 120; 122; 152; 164) comprises a storage device (128) for the permanent storage of resistance values.

6. Measuring bridge apparatus in accordance with any one of the preceding claims, **characterized in that** a resistance branch (110; 112; 114; 116) has at least one fixed resistor (126; 130, 132; 134; 136, 138) and in particular **in that** at least one resistance branch (114; 116) has at least one temperature-dependent resistor (132; 138).

7. Measuring bridge apparatus in accordance with any one of the preceding claims, **characterized in that** at least one resistance branch (110, 114; 112, 116) is connected in parallel to a strain gauge (88b; 84b).

8. Measuring bridge apparatus in accordance with any one of the preceding claims, **characterized in that** at least one resistance branch (112, 116; 110, 114) is connected in parallel to the bridge circuit (90).

9. Measuring bridge apparatus in accordance with any one of the preceding claims, **characterized in that** the bridge circuit (90) has a first output (96) and a second output (98) and/or has a first input (92) and a second input (94) and **in that** at least one digital resistor (164; 152) is arranged between the first output (96) and the second output (98) or the first input (92) and the second input (94).

10. Measuring bridge apparatus in accordance with any one of the preceding claims, **characterized in that** at least one digital resistor is coupled, via a releasable plug-and-socket connection, to one or more inputs and/or one or more outputs of the bridge circuit (90), and in particular **in that** the at least one digital resistor (152) is connected in parallel to a temperature-dependent resistor (154).

11. Measuring bridge apparatus in accordance with claim 9 or 10, **characterized in that** the first input (92) and/or the second input (94) has at least one temperature-dependent resistor (154; 158) associated with it.

12. Force measuring cell, in particular weighing cell, comprising a measuring bridge apparatus (80) in accordance with any one of the preceding claims.

13. Method for trimming a force measuring cell in accordance with claim 12, in which method the force measuring cell is positioned in a climate chamber and defined temperature courses are run through in the climate chamber while automatically adjusting the at least one digital resistor in its resistance value.

14. Method in accordance with claim 13, **characterized in that** the adjusted value for the respective temperature is stored, and in particular **in that** trimming is performed either on a first pair of strain gauges or on a second pair of strain gauges, wherein the resistors or resistance branches not used in the trimming procedure are turned-off, and in particular **in that** the turn-off is achieved via a switch or by raising a resistance value of the at least one digital resistor, and in particular **in that** a trim process on the pair on which trimming is performed is conducted as a zero point offset compensation, and in particular **in that** in a trim process, first balancing to zero and then compensating for temperature are performed, and in particular **in that** after compensating for temperature, re-balancing to zero is performed and in particular **in that** during a trim process the resistance value of at least one digital resistor between inputs and/or outputs of the bridge circuit is adjusted, and in particular **in that** in a last step at least one digital resistor is replaced with a fixed resistor of the same resistance value.

## Revendications

1. Dispositif de pont de mesure, en particulier pour une cellule de mesure de force (10), comprenant des jauges de déformation (84a, 84b, 88a, 88b), lesquelles sont disposées dans un montage en pont (90),
**caractérisé par** un système de résistance (106), qui présente au moins une résistance numérique (108 ; 118 ; 120 ; 122 ; 152 ; 164) pouvant être réglée, qui est couplé au circuit en pont (90) et présente une pluralité de branches de résistance (110, 112, 114, 116), une branche de résistance (110 ; 112 ; 114 ; 116) présentant au moins une résistance numérique (108 ; 118 ; 120 ; 122), et **caractérisé par** un système d'alimentation en énergie (142) pour la au moins une résistance numérique (108 ; 118 ; 120 ; 122 ; 152 ; 156 ; 164), qui est couplée à un système d'alimentation en énergie du circuit en pont (90).

2. Dispositif de pont de mesure selon la revendication 1, **caractérisé par** un système de sortie de signal (100), au niveau duquel sont fournis des signaux de mesure analogiques.

3. Dispositif de pont de mesure selon la revendication 1 ou 2, **caractérisé par** une interface numérique (140), qui est couplée au système de résistance (106).

4. Dispositif de pont de mesure selon l'une quelconque des revendications précédentes, **caractérisé en ce que** la au moins une résistance numérique (108 ; 118 ; 120 ; 122 ; 152 ; 164) est réalisée sous la forme d'un potentiomètre numérique.

5. Dispositif de pont de mesure selon l'une quelconque des revendications précédentes, **caractérisé en ce que** la au moins une résistance numérique (108 ; 118 ; 120 ; 122 ; 152 ; 164) comprend un système de mémorisation (128) servant à mémoriser dans la durée des valeurs de résistance.

6. Dispositif de pont de mesure selon l'une quelconque des revendications précédentes, **caractérisé en ce qu'**une branche de résistance (110 ; 112 ; 114 ; 116) présente au moins une résistance fixe (126 ; 130, 132 ; 134 ; 136, 138), et en particulier **en ce qu'**au moins une branche de résistance (114 ; 116) présente au moins une résistance (132 ; 138) dépendant de la température.

7. Dispositif de pont de mesure selon l'une quelconque des revendications précédentes, **caractérisé en ce qu'**au moins une branche de résistance (110, 114 ; 112, 116) est montée en parallèle à une jauge de déformation (88b ; 84b).

8. Dispositif de pont de mesure selon l'une quelconque des revendications précédentes, **caractérisé en ce qu'**au moins une branche de résistance (112, 116 ; 110, 114) est montée en parallèle au circuit en pont (90).

9. Dispositif de pont de mesure selon l'une quelconque des revendications précédentes, **caractérisé en ce que** le montage en pont (90) présente une première sortie (96) et une deuxième sortie (98) et/ou présente une première entrée (92) et une deuxième entrée (94), et **en ce qu'**au moins une résistance numérique (164 ; 152) est disposée entre la première sortie (96) et la deuxième sortie (98) ou entre la première entrée (92) et la deuxième entrée (94).

10. Dispositif de pont de mesure selon l'une quelconque des revendications précédentes, **caractérisé en ce qu'**au moins une résistance numérique est couplée à une ou plusieurs entrées et/ou à une ou plusieurs sorties du montage en pont (90) par l'intermédiaire d'un connecteur à fiches amovible, et en particulier **en ce que** la au moins une résistance numérique (152) est montée en parallèle par rapport à une résistance (154) dépendant de la température.

11. Dispositif de pont de mesure selon la revendication 9 ou 10, **caractérisé en ce qu'**au moins une résistance (154 ; 158) dépendant de la température est associée à la première entrée (92) et/ou à la deuxième entrée (94).

12. Cellule de mesure de force, en particulier cellule de pesage, qui comprend un dispositif de pont de mesure (80) selon l'une quelconque des revendications précédentes.

13. Procédé servant à égaliser une cellule de mesure de force selon la revendication 12, dans le cadre duquel la cellule de mesure de force est positionnée dans une chambre climatisée, et en ce que des courbes de température définies sont parcourues dans la chambre climatisée, et en ce que dans ce cadre la au moins une résistance numérique est automatiquement réglée dans sa valeur de résistance.

14. Procédé selon la revendication 13, **caractérisé en ce que** la valeur réglée pour la température respective est mémorisée, et en particulier **en ce qu'**une égalisation est effectuée soit au niveau d'une première paire de jauges de déformation soit au niveau d'une deuxième paire de jauges extensométriques, précisément les résistances ou les branches de résistance, pour lesquelles aucune égalisation n'est effectuée, étant débranchées, et en particulier **en ce que** le débranchement est réalisé par l'intermédiaire d'un commutateur ou en réglant une valeur de résistance de la au moins une résistance numérique sur une haute valeur, et en particulier **en ce qu'**une égalisation est effectuée sur la paire, sur laquelle l'égalisation est réalisée, comme une compensation d'un décalage du point zéro, et en particulier **en ce que** lors d'une opération d'égalisation, une égalisation du point zéro est tout d'abord réalisée, puis l'évolution de la température est ensuite égalisée, et en particulier **en ce qu'**après l'égalisation d'une évolution de température, une nouvelle égalisation du point zéro est réalisée, et en particulier **en ce que** lors d'une opération d'égalisation, la valeur de résistance d'au moins une résistance numérique entre des entrées et/ou sorties du circuit en pont est adaptée, et en particulier **en ce qu'**au moins une résistance numérique est remplacée, lors d'une dernière étape, par une résistance fixe présentant une valeur de résistance égale.
